# EUROPÄISCHE PATENTSCHRIFT

(11) **EP 1 167 092 B1**
(45) Veröffentlichungstag und Bekanntmachung des Hinweises auf die Patenterteilung: **15.03.2006**
(21) Anmeldenummer: 01110959.2
(22) Anmeldetag: 07.05.2001
(51) Int. Cl.: B60G 7/00

(54) **Querlenker einer Radaufhängung**
Lateral arm for a wheel suspension
Bras latéral de suspension de roue

(30) Priorität: 19.06.2000 DE 10029189
(43) Veröffentlichungstag der Anmeldung: 02.01.2002
(73) Patentinhaber: Georg Fischer Fahrzeugtechnik AG, 8201 Schaffhausen (CH)
(72) Erfinder: Tunzini, Simon, 8400 Winterthur (CH)
(74) Vertreter: Weiss, Wolfgang

(56) Entgegenhaltungen:
- EP-A- 1 138 975
- US-A- 4 556 234
- US-A- 5 516 130
- US-A- 5 938 220
- US-A- 6 003 897
- PATENT ABSTRACTS OF JAPAN vol. 011, no. 146 (M-587), 13. Mai 1987 (1987-05-13) & JP 61 282106 A (MAZDA MOTOR CORP), 12. Dezember 1986 (1986-12-12)
- PATENT ABSTRACTS OF JAPAN vol. 017, no. 123 (M-1380), 15. März 1993 (1993-03-15) & JP 04 306111 A (MAZDA MOTOR CORP), 28. Oktober 1992 (1992-10-28)

## Beschreibung

Die Erfindung bezieht sich auf einen Querlenker einer Radaufhängung für ein Rad eines Kraftfahrzeuges umfassend ein einstückiges Gussteil mit einem Befestigungsbereich zur Befestigung an einer Lageranordnung des Rades, mit weiteren Befestigungsbereichen zur Befestigung an einem Chassis des Kraftfahrzeuges und mit einem flächigen Bereich mit mindestens einem Durchbruch.

Im Kraftfahrzeugbau dienen Querlenker für die Führung und Lenkung der Räder. Der Querlenker stellt auf der einen Seite die Verbindung mit der Lageranordnung des Rades und auf der anderen Seite die Verbindung mit dem Chassis des Fahrzeuges her. Die Lageranordnung umfasst neben dem Radlager und die Antriebswelle unter anderem auch ein Schwenklager, eine Verbindung mit dem Achsschenkel und mit einem Führungsgelenk, mit der Spurstange sowie weitere Elemente für die Lenkung, den Antrieb, die Federung und die Bremsung des Fahrzeuges. Im Betrieb des Fahrzeuges ist der Querlenker vielseitige Beanspruchungen ausgesetzt. Oft sind deshalb auch pro Rad zwei Querlenker vorgesehen. Die hohe Beanspruchung des Querlenkers kann mit einer besonders festen und stabilen Konstruktion aufgefangen werden. Eine solche Konstruktion bringt oft auch ein hohes Gewicht mit sich, was zu erhöhtem Treibstoffverbrauch führt. Auch die Sicherheit des Fahrzeuges im Falle eines Zusammenstosses erfordert eine optimale Auslegung des Querlenkers.

Aus der DE 38 00 944 C1 ist eine Lageranordnung für einen einteiligen Querlenker einer Radaufhängung bekannt. Der Querlenker selbst ist ein in sich ausgesteiftes Bauteil, das auf der Seite des Rades mit dem Radträger verbunden ist. Auf der anderen Seite ist der Querlenker über zwei Lagerglieder, bestehend aus Lagerzapfen und Lagerbohrungen, die zueinander fluchtend in der Fahrtrichtung angeordnet sind, mit einem Längsträger des Fahrzeugaufbaues verbunden. Im Falle eines Zusammenstosses in oder entgegen der Fahrtrichtung löst sich eines der Lagerglieder, das fliegend gelagert ist. Die Aufprallenergie wird nicht auf die Fahrgastzelle übertragen, sondern durch Verformung des Längsträgers aufgenommen. Es wird auch verhindert, dass der verhältnismässig steife und schwere Querlenker in der Fahrgastzelle eindringt. Nach einem Zusammenstoss muss zumindest der Längsträger ersetzt oder instandgesetzt werden. Der Längsträger eines Fahrzeuges ist insgesamt wesentlich schwerer in Gewicht und schlechter zugänglich als der Querlenker.

Aus der US 4 556 234 B der Anmelderin ist ein gegossener Lenker für die Aufhängung von Kraftfahrzeugrädern bekannt. Der Lenker weist einen Querschnitt mit Schenkeln und Querstegen auf.

Aus der JP 61-282 106-A1 ist ein Trägerarm für ein Fahrzeugvorderrad bekannt. Der Trägerarm weist Befestigungsbereiche zur Befestigung des Rades und zur Befestigung des Chassis auf. Der Trägerarm weist zwischen den Befestigungsbereichen ein flächiger Bereich mit Durchbrüchen und einen dickeren Rand auf.

Ausgehend von diesem Stand der Technik ist es Aufgabe der Erfindung, einen Querlenker einer Radaufhängung anzugeben, mit dem, bei erhöhten Anforderungen der Fahrzeugsicherheit und des Treibstoffverbrauches, das Fahrzeuggewicht und der Aufwand für die Reparatur verringert wird.

Diese Aufgabe wird gelöst durch einen Querlenker nach Anspruch 1.

Bevorzugte Weiterbildungen der Erfindung ergeben sich aus den abhängigen Ansprüchen.

Es ist von Vorteil, dass, im Falle eines Aufpralls des Kraftfahrzeuges, die Aufprallenergie durch eine definierte Verformung des Querlenkers aufgenommen wird. Dies wird dadurch erreicht, dass der flächige Bereich des Querlenkers benachbart zum nierenförmigen Durchbruch eine Rampe mit einer zum nierenförmigen Durchbruch hin zunehmenden Wandstärke aufweist.

Es ist auch von Vorteil, dass, im Falle eines Aufpralls des Kraftfahrzeuges, der Querlenker sich definiert verformt, ohne durch Bruch zu versagen. Dies wird dadurch erreicht, dass ein erster hantelförmiger Durchbruch zwischen der Rampe und der Befestigungsbereich zur Befestigung an der Lageranordnung des Rades angeordnet ist. Dies wird auch dadurch erreicht, dass der zweite hantelförmige Durchbruch zwischen den Enden der Hantel einen Verbindungsbereich aufweist, der zum ersten Befestigungsbereich zur Befestigung an dem Chassis des Kraftfahrzeuges hin sich verjüngend ausgebildet ist.

Die Durchbrüche und die Rampe bringen bei vergleichbarer Festigkeit eine erhebliche Gewichtseinsparung des Querlenkers. Durch die Durchbrüche kann das Schmutzwasser besser ablaufen. Die Durchbrüche können auch als Dürchführungen für verschiedene Leitungen verwendet werden.

Ein Ausführungsbeispiel der Erfindung wird anhand der Figuren beschrieben. Es zeigen:
Figur 1 eine perspektivische Sicht auf einen erfindungsgemässen Querlenker,
Figur 2 eine Aufsicht auf den Querlenker von Figur 1 und
Figur 3 einen Schnitt durch den Querlenker entlang der gebrochnenen Linie BB von Figur 2.

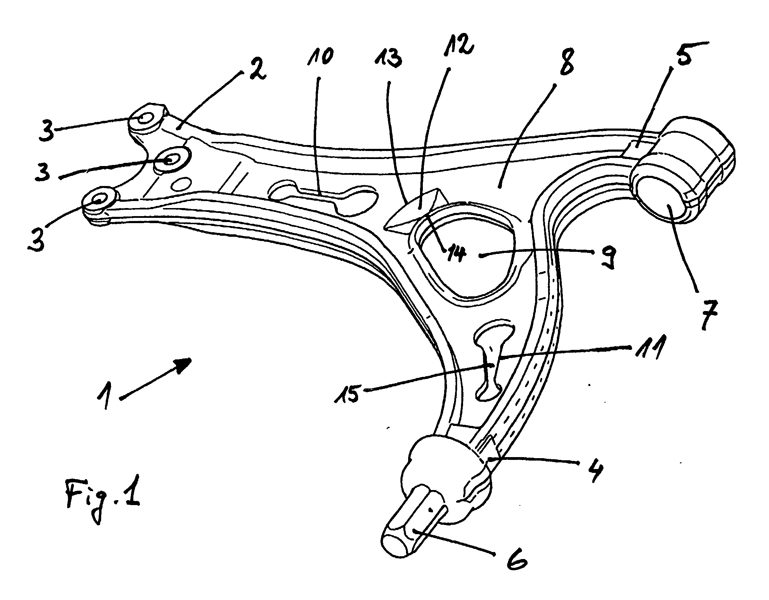

In Figur 1 ist einen Querlenker 1 für die Aufhängung eines Rades eines Kraftfahrzeuges dargestellt. In Figur 1 ist beispielsweise der linke vordere Querlenker, wie aus der Fahrgastzelle gesehen, perspektivisch dargestellt. Der Querlenker 1 ist ein relativ flaches Bauteil, dass als einstückiges Gussteil 1 aus Stahlguss, aus Gusseisen mit Kugelgraphit oder aus einer Leichtmetalllegierung hergestellt werden kann.

Auf der linken Seite der Figur 1, d.h. in dem linken vorderen Eckbereich des Fahrzeuges, wird am Querlenker eine hier nicht dargestellte und nicht näher beschriebene Radlageranordnung mit Radträger, Achsschenkel und mit weiteren Elementen für die Lenkung, Federung, Bremsung und Antrieb des Fahrzeuges befestigt. Der Querlenker, das einstückige Gussteil 1, weist hierzu einen Befestigungsbereich 2 mit beispielsweise drei Bohrungen 3 zur Befestigung an eine Lageranordnung oder an einem Führungsschenkel des Rades auf. Die Bohrungen 3 können als Buchsen aus Stahl oder aus einer anderen Legierung vor dem Giessen in die Form eingesetzt werden um nach dem Giessen eine feste Verbindung mit dem Befestigungsbereich 2 zur Befestigung der hier nicht dargestellten Radlageranordnung zu bilden.

Auf der Seite des Chassis, das hier ebenfalls nicht dargestellt ist, weist das Gussteil 1 zwei weiteren Befestigungsbereiche 4, 5 zur Befestigung an dem Chassis des Fahrzeuges auf. Der erste Chassisbefestigungsbereich 4, der auf der Seite der Fahrgastzelle mit dem Chassis verbunden wird, weist einen Lagerzapfen 6 auf und der zweite Chassisbefestigungsbereich 5, der auf der Frontseite des Fahrzeuges mit dem Chassis verbunden wird, weist eine Lagerbuchse 7 auf. Die Achsen des Lagerzapfens 6 und der Lagerbuchse 7 sind fluchtend zu einander ausgerichtet. Hierdurch wird eine Bewegung des Radbefestigungsbereiches 2 um eine Achse ermöglicht, die in die Fahrtrichtung verläuft. Durch weitere federnde Elemente, wie beispielsweise ein Gummipolster in der Buchse 7 oder um den Zapfen 6 und durch die federnde Radaufhängung wird so eine Auf- und Abbewegung des Rades, beispielsweise bei Unebenheiten der Fahrbahn ermöglicht.

Das Gussteil 1 weist zwischen dem Radbefestigungsbereich 2 und den Chassisbefestigungsbereichen 4, 5 einen flächigen Bereich 8 auf. In diesem flächigen Bereich 8 sind Durchbrüche 9, 10, 11 ausgespart. Ein erster nierenförmiger Durchbruch 9 befindet sich in der Nähe des Schwerpunktes des Dreieckes, das durch die drei Befestigungsbereiche 2,4,5 gebildet wird. Zwischen dem nierenförmigen Durchbruch 9 und dem Radbefestigungsbereich 2 grenzt am nierenförmigen Durchbruch 9 eine Rampe 12 an. Die Rampe 12 ist wie ein seitlich abgeschrägtes Prisma auf dem flächigen Bereich 8 aufgesetzt. Die Rampe 12 fängt mit einer Basislinie 13 im flächigen Bereich 8 an und endet in einer Spitze 14, die an einer Seite des nierenförmigen Durchbruchs 9 angrenzt, die zum Radbefestigungsbereichs 2 zeigt.

Im Bereich der Rampe 12 weist der flächige Bereich 8 eine Wandstärke auf, die zum nierenförmigen Durchbruch 9 hin zunimmt. Durch diese Rampe 12 mit variablen Wandstärke werden im flächigen Bereich 8 bei einer Belastung, beispielsweise im Falle eines Zusammenstosses, zu hohe Spannungen verhindert. Die Bereiche des Querlenkers 1, die auf Zug und auf Druck beansprucht werden, werden durch die Ausbildung der Rampe 12 benachbart zum nierenförmigen Durchbruch 9 klar voneinander abgegrenzt. Die Spannungen, die in diesem Bereich im Querlenker auftreten, werden gleichmässiger verteilt und deshalb niedriger. Hierdurch wird einen Bruch des Gussteiles 1 verhindert und es wird eine gezielte Verformung des Gussteiles erreicht.

Die gleiche Aufgabe erfüllen auch die hantelförmige Durchbrüche 10, 11. Ein erster hantelförmige Durchbruch 10 ist zwischen der Rampe 12 und dem Radbefestigungsbereich 2 ausgebildet. Der zweite hantelförmige Durchbruch 11 ist zwischen dem nierenförmigen Durchbruch 9 und dem ersten Chassisbefestigungsbereich 4, der auf der Seite der Fahrgastzelle mit dem Chassis verbunden wird, ausgebildet. Um die Verformung des Querlenkers in der gewünschten Richtung zu lenken, und um einen Bruch des Querlenkers zu verhindern, sind die Durchbrüche 10,11 hantelförmig oder in der Form von Schlüssellöchern 10, 11 ausgebildet. Der zweite hantelförmige Durchbruch 11 weist zwischen den Enden der Hantel einen Verbindungsbereich 13 auf, der sich zum ersten Chassisbefestigungssbereich 4 hin verjüngt.

Durch die Ausbildung der Rampe 12 und durch die Aussparung der nierenförmigen und/oder hantelförmigen Durchbrüchen 9, 10, 11 wird das Gewicht des Querlenkers erheblich reduziert. Die Wandstärke des flächigen Bereichs 8 wird reduziert auf das Minimum, das für die Sicherheits- und Festigkeitsanforderungen notwendig ist. Im Falle eines Aufpralls des Fahrzeuges wird sich der Querlenker lediglich verformen und nicht brechen. Die Aufprallenergie wird durch die Verformung des Querlenkers aufgenommen und nicht durch die Verformung von anderen schwer zugänglichen Fahrzeugbauteilen, die andere wichtige Aufgaben für die Konstruktion des Fahrzeuges, wie beispielsweise das Tragen des Motorblockes und der Fahrgastzelle, erfüllen müssen. Der Querlenker ist im Vergleich zum Längsträger ein kleineres und einfacher zu ersetzendes Bauteil des Kraftfahrzeuges. Die Fahrzeugreparatur wird günstiger und weniger zeitraubend.

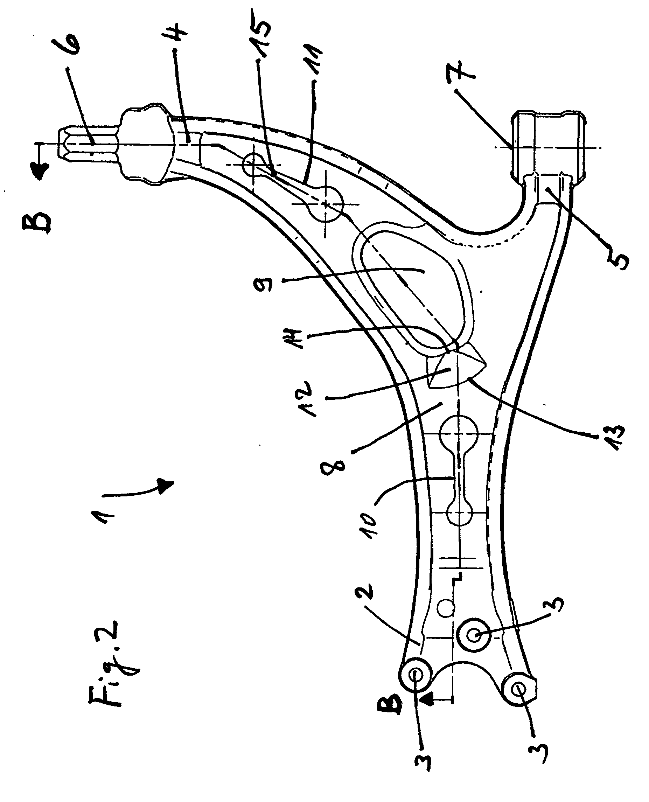

In Figur 2 ist eine Aufsicht auf einen Querlenker 1 dargestellt. Hier ist besonders gut ersichtlich, wie die Achsen des Lagerzapfens 6 und der Lagerbuchse 7 zueinander fluchtend angeordnet sind. Auch die Verjüngung des Verbindungsbereiches 15 des zweiten hantelförmigen Durchbruches 11 ist gut ersichtlich. Die Ausbildung der Rampe 12, die von der Basislinie 13 mit zunehmender Wandstärke des Flächigen Bereichs 8 zur Spitze 14 verläuft, ist in Figur 2 ebenfalls ersichtlich.

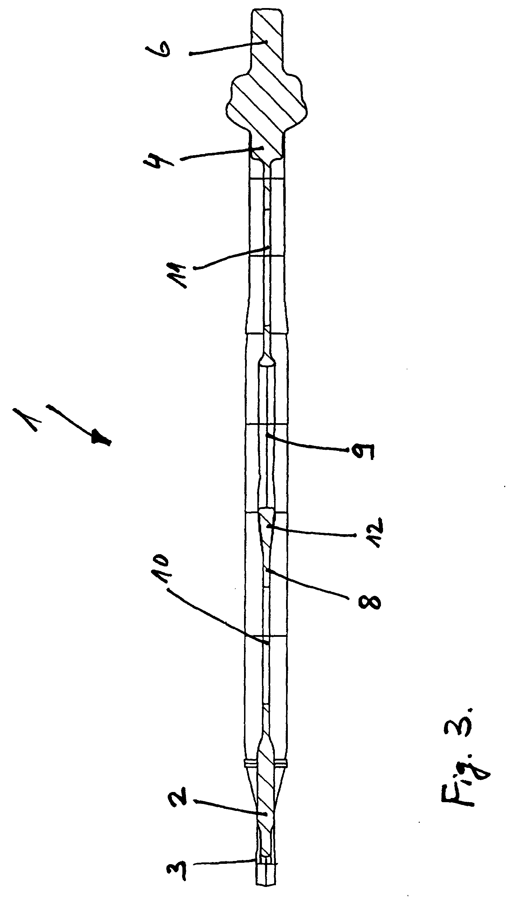

In Figur 3 ist der erfindungsgemässe Querlenker 1 geschnitten dargestellt. Der Schnitt von Figur 3 verläuft entlang einer Linie, die in Figur 2 als gebrochene und abgewinkelte Strichlinie BB eingezeichnet ist. Im Schnitt von Figur 3 ist insbesondere die Ausbildung der Rampe 9 entlang der Linie BB gut ersichtlich.

## Patentansprüche

1. Querlenker einer Radaufhängung für ein Rad eines Kraftfahrzeuges umfassend ein einstückiges Gussteil (1) mit einem Befestigungsbereich (2) zur Befestigung an einer Lageranordnung des Rades, mit weiteren Befestigungsbereichen (4,5) zur Befestigung an einem Chassis des Kraftfahrzeuges und mit einem flächigen Bereich (8) mit mindestens einem Durchbruch (9,10,11), wobei der Durchbruch hantelförmig und/oder nierenförmig ausgebildet ist, wobei der flächige Bereich (8) benachbart zum nierenförmigen Durchbruch (9) eine Rampe (12) mit einer zum nierenförmigen Durchbruch (9) hin zunehmenden Wandstärke aufweist, wobei die Rampe (12) an einem dickeren Rand des Durchbruchs (9) anschliesst.

2. Querlenker einer Radaufhängung nach dem Anspruch 1, **dadurch gekennzeichnet, dass** die Rampe (12) benachbart zum nierenförmigen Durchbruch (9) auf der Seite des Befestigungsbereichs (2) zur Befestigung an der Lageranordnung des Rades angeordnet ist.

3. Querlenker einer Radaufhängung nach dem der Ansprüche 1 oder 2, **dadurch gekennzeichnet, dass** ein erster hantelförmiger Durchbruch (10) zwischen der Rampe (12) und dem Befestigungsbereich (2) zur Befestigung an der Lageranordnung des Rades angeordnet ist.

4. Querlenker einer Radaufhängung nach einem der Ansprüche 1 bis 3, **dadurch gekennzeichnet, dass** ein zweiter hantelförmiger Durchbruch (11) zwischen dem der Rampe gegenüberliegenden Seite des nierenförmigen Durchbruchs (9) und einem ersten Befestigungsbereich (4) zur Befestigung an dem Chassis des Kraftfahrzeuges angeordnet ist.

5. Querlenker einer Radaufhängung nach einem der Ansprüche 1 bis 4, **dadurch gekennzeichnet, dass** der zweite hantelförmige Durchbruch (11) zwischen den Enden der Hantel einen Verbindungsbereich (15) aufweist, der zum ersten Befestigungsbereich (4) zur Befestigung an dem Chassis des Kraftfahrzeuges hin sich verjüngend ausgebildet ist.

6. Querlenker einer Radaufhängung nach einem der Ansprüche 1 bis 5, **dadurch gekennzeichnet, dass** der nierenförmige Durchbruch (9) im flächigen Bereich (8) benachbart zum zweiten Befestigungsbereich (5) zur Befestigung an dem Chassis des Kraftfahrzeuges angeordnet ist.

7. Querlenker einer Radaufhängung nach einem der Ansprüche 1 bis 6, **dadurch gekennzeichnet, dass** das Gussteil (1) aus Stahlguss, aus Gusseisen, insbesondere Kugelgraphitgusseisen oder aus Leichtmetallguss, beispielsweise aus Aluminium oder einer Aluminium-Magnesium-Legierung ausgebildet ist.

## Claims

1. Wishbone of a wheel-suspension system for a motor-vehicle wheel, comprising a one-piece casting (1) with a fixing zone (2) for fixing to a bearing arrangement of the wheel, with further fixing zones (4, 5) for fixing to a chassis of the motor vehicle, and with a flat zone (8) with at least one aperture (9, 10, 11), wherein the aperture is of dumbbell-shaped and/or kidney-shaped design, adjacent to the kidney-shaped aperture (9), the flat zone (8) has a ramp (12) with a wall thickness that increases towards the kidney-shaped aperture (9), the ramp (12) adjoining a thicker edge of the aperture (9).

2. Wishbone of a wheel-suspension system according to Claim 1, **characterized in that** the ramp (12) is arranged adjacent to the kidney-shaped aperture (9), on the side facing the fixing zone (2) for fixing to the bearing arrangement of the wheel.

3. Wishbone of a wheel-suspension system according to either of Claims 1 or 2, **characterized in that** a first dumbbell-shaped aperture (10) is arranged between the ramp (12) and the fixing zone (2) for fixing to the bearing arrangement of the wheel.

4. Wishbone of a wheel-suspension system according to any of Claims 1 to 3, **characterized in that** a second dumbbell-shaped aperture (11) is arranged between the opposite side of the kidney-shaped aperture (9) from the ramp and a first fixing zone (4) for fixing to the chassis of the vehicle.

5. Wishbone of a wheel-suspension system according to any of Claims 1 to 4, **characterized in that**, between the ends of the dumbbell, the second dumbbell-shaped aperture (11) has a connecting zone (15) which tapers towards the first fixing zone (4) for fixing to the chassis of the motor vehicle.

6. Wishbone of a wheel-suspension system according to any of Claims 1 to 5, **characterized in that** the kidney-shaped aperture (9) is arranged in the flat zone (8) adjacent to the second fixing zone (5) for fixing to the chassis of the motor vehicle.

7. Wishbone of a wheel-suspension system according to any of Claims 1 to 6, **characterized in that** the casting (1) is formed from cast steel, cast iron, especially spheroidal graphite iron, or a cast light alloy, e.g. aluminium or an aluminium/magnesium alloy.

## Revendications

1. Bras oscillant transversal de suspension de roue pour une roue d'un véhicule automobile, comprenant une pièce moulée (1) d'un seul tenant avec une région de fixation (2) pour la fixation à un ensemble de palier de la roue, avec d'autres régions de fixation (4, 5) pour la fixation à un châssis du véhicule automobile, et avec une région plate (8) pourvue d'au moins un ajour (9, 10, 11), l'ajour étant réalisé en forme d'haltère et/ou réniforme, la région plate (8) présentant, au voisinage de l'ajour réniforme (9), une rampe (12) ayant une épaisseur de paroi augmentant en direction de l'ajour réniforme (9), la rampe (12) se raccordant à un bord épaissi de l'ajour (9).

2. Bras oscillant transversal de suspension de roue selon la revendication 1, **caractérisé en ce que** la rampe (12) est disposée au voisinage de l'ajour réniforme (9) du côté de la région de fixation (2) pour la fixation à l'ensemble de palier de la roue.

3. Bras oscillant transversal de suspension de roue selon la revendication 1 ou 2, **caractérisé en ce qu'**un premier ajour (10) en forme d'haltère est disposé entre la rampe (12) et la région de fixation (2) pour la fixation à l'ensemble de palier de la roue.

4. Bras oscillant transversal de suspension de roue selon l'une quelconque des revendications 1 à 3, **caractérisé en ce qu'**un deuxième ajour (11) en forme d'haltère est disposé entre le côté de l'ajour réniforme (9) qui est opposé à la rampe et une première région de fixation (4) pour la fixation au châssis du véhicule automobile.

5. Bras oscillant transversal de suspension de roue selon l'une quelconque des revendications 1 à 4, **caractérisé en ce que** le deuxième ajour (11) en forme d'haltère présente, entre les extrémités de l'haltère, une région de liaison (15) qui est configurée en se rétrécissant en direction de la première région de fixation (4) pour la fixation au châssis du véhicule automobile.

6. Bras oscillant transversal de suspension de roue selon l'une quelconque des revendications 1 à 5, **caractérisé en ce que** l'ajour réniforme (9) est disposé dans la région plate (8) au voisinage de la deuxième région de fixation (5) pour la fixation au châssis du véhicule automobile.

7. Bras oscillant transversal de suspension de roue selon l'une quelconque des revendications 1 à 6, **caractérisé en ce que** la pièce moulée (1) est réalisée en acier moulé, en fonte, notamment en fonte à graphite sphéroïdal, ou en métal léger moulé, par exemple en aluminium ou en un alliage d'aluminium et de magnésium.
